Europäisches Patentamt

European Patent Office

Office européen des brevets

(19)

(11) Veröffentlichungsnummer: **0 037 065**
**B1**

(12) **EUROPÄISCHE PATENTSCHRIFT**

(45) Veröffentlichungstag der Patentschrift:
08.08.84

(51) Int. Cl.³: **G 03 G 15/00,** G 03 B 27/58,
B 65 H 3/08, B 65 H 5/00

(21) Anmeldenummer: 81102232.6

(22) Anmeldetag: 25.03.81

(54) Vorrichtung für den Einzug und den Transport von Druckformen.

(30) Priorität: 02.04.80 DE 3012761

(43) Veröffentlichungstag der Anmeldung:
07.10.81 Patentblatt 81/40

(45) Bekanntmachung des Hinweises auf die Patenterteilung:
08.08.84 Patentblatt 84/32

(84) Benannte Vertragsstaaten:
BE DE FR GB IT NL

(56) Entgegenhaltungen:
EP - A - 0 000 048
DE - A - 2 516 884
DE - B - 2 462 216
DE - U - 6 947 980
DE - U - 7 802 578

(73) Patentinhaber: HOECHST AKTIENGESELLSCHAFT,
Postfach 80 03 20, D-6230 Frankfurt am Main 80 (DE)

(72) Erfinder: Back, Günter, Rosenstrasse 33,
D-6293 Diedenbergen (DE)
Erfinder: Schön, Klaus-Peter, Rathenauplatz 14,
D-6200 Wiesbaden 1 (DE)

**Beschreibung**

Die Erfindung betrifft eine Vorrichtung für den Einzug und den Transport von Druckformen auf einen Belichtungstisch mit Hilfe von Rollen.

Die Herstellung von beschrifteten und bebilderten Druckplatten, die unmittelbar zum Drucken geeignet sind, geschieht in der Weise, daß diese Druckplatten zuerst elektrostatisch aufgeladen und anschließend eine Vorlage bildmäßig auf die einzelne Druckplatte projiziert wird. Nach Beendigung dieses Belichtungsvorgangs wird die Druckplatte mit einem Entwickler entwickelt, fixiert und entschichtet, wonach sie fertig für den Druck ist.

Aus der DE-PS 2 462 216 ist ein Gerät zur elektrofotografischen Herstellung von Druckformen bekannt, bei dem die einzelne Druckform von einem Stapel in einem Plattenmagazin durch eine Transportvorrichtung abgehoben wird, die aus einem Transportwagen mit einer Unterdrucksaugeinrichtung besteht und welche die Druckform zu einer Belichtungsbühne transportiert. Um das Aufladen der einzelnen Druckform zeitsparend mit deren Transport zu der Belichtungsbühne zu verbinden, ist eine Corona-Aufladestation für die elektrostatische Aufladung der Druckplatten an der Vorderseite des Transportwagens angeordnet und erstreckt sich quer zur Bewegungsrichtung des Transportwagens. Der Transportwagen läuft über zwei Führungsschienen und ist von einem auf der Oberseite angeordneten Motor antreibbar, der über ein Zahnrad mit einem Zahnstangentrieb im Eingriff steht, der parallel zu der Bewegungsrichtung des Transportwagens angeordnet ist. Dieser weist an der Unterseite eine Vakuumplatte auf, die über eine Anzahl von Löchern mit einer Vakuumpumpe in Verbindung steht. Beim Aufsetzen des Transportwagens auf die Oberseite der obersten Druckplatte im Plattenmagazin wird ein Unterdruck erzeugt, durch den diese Druckplatte an die Vakuumplatte angesaugt wird. Danach wird der Transportwagen mit Hilfe des Motors in Richtung der Belichtungsbühne verfahren. Sobald er seine Position oberhalb der Belichtungsbühne erreicht hat, erfolgt eine Absenkung auf die Belichtungsbühne und das Aufheben des Vakuums der Vakuumplatte, so daß die Druckplatte freigegeben und auf die Belichtungsbühne abgesetzt wird. Diese ist gleichfalls als Vakuumplatte ausgebildet und wird mit Unterdruck beaufschlagt, so daß die Druckplatte fest gegen die Belichtungsbühne gepreßt wird.

Bei diesem bekannten Gerät wird beim Abheben der einzelnen Druckplatte vom Stapel die fotoleitende beschichtete Seite der Druckplatte mit Saugeinrichtungen berührt, die zwar einen wesentlich schonenderen Transport der Druckplatte als Rollen oder Bänder bekannter Geräte ermöglichen, die über die beschichtete Seite der Druckplatte geführt sind, jedoch können mechanische oder physikalische Fehlstellen auf der fertig entwickelten Druckplatte durch die Saugeinrichtungen nicht völlig ausgeschlossen werden.

Aus der DE-U-7 802 578 war es bereits bekannt, mittels Ansaugen der nicht beschichteten Seite von Druckplatten diese einem Stapel zu entnehmen und dadurch Schwenken in die für Aufladung und Belichtung vorgesehene Lage zu bringen.

Aus der veröffentlichten europäischen Patentanmeldung 0 000 048 ist eine Transportstation für Druckplatten bekannt, die einen Stapelbereich umfaßt, in dem sich ein Vorrat an Druckplatten befindet. Für die zwischen jeweils zwei Platten vorhandenen Papierblätter ist eine Papierablage vorhanden. Die Druckplatten werden durch einen Steuerungsmechanismus, der eine Anzahl von Saugnäpfen aufweist, vom Stapelbereich zu einem Förderband transportiert. Der Steuerungsmechanismus ist schwenkbar an einer Führungsstange befestigt, die über ein Getriebe mit einem Motor verbunden ist, um eine seitliche Gleitbewegung vor und zurück ausführen zu können. Die oberste Druckplatte wird von zumindest vier Saugnäpfen des Steuerungsmechanismus angesaugt. Dann schwenkt der Steuerungsmechanismus nach oben, und gleichzeitig wird die Führungsstange mechanisch auf das Förderband hinbewegt. Wird das Vakuum in den Saugnäpfen aufgehoben, senkt sich der Steuerungsmechanismus nach unten ab und legt die Druckplatte auf dem Förderband ab. Ein zweiter Steuerungsmechanismus oberhalb des Papierzwischenblattes ergreift das Papierblatt, hebt es ab und befördert es zu der Papierablage.

Das Förderband transportiert die Druckplatte auf eine Belichtungsbühne, die eine Anzahl von Löchern in ihrer Oberfläche aufweist und eine Kammer bildet, die über eine Saugleitung mit einer Vakuumpumpe verbunden ist. Die Druckplatte wird, nachdem sie die richtige Stellung auf der Oberfläche der Belichtungsbühne eingenommen hat, durch Erzeugen eines Vakuums auf dieser festgehalten. Die Druckplatte wird mit Hilfe eines Belichtungssystems belichtet, das einen beweglichen Wagenschlitten aufweist, an dem eine Coronaaufladevorrichtung und ein Licht reflektierender Spiegel angeordnet sind. Ein Laser für die Abstrahlung von moduliertem Laserlicht ist so angeordnet, daß der von dem Laser ausgesandte Lichtstrahl von dem Spiegel abgelenkt wird und in einer Ebene etwa senkrecht zu der Oberfläche der auf der Belichtungsbühne aufliegenden Druckplatte auftrifft.

Ebenso wie im zuvor erwähnten Stand der Technik erfolgt das Abheben der obersten Druckplatte vom Stapel in der Weise, daß die fotoleitfähige Schicht der Druckplatte mit Saugeinrichtungen berührt wird, was zu mechanischen oder physikalischen Fehlstellen auf der fertigen Druckplatte führen kann.

Um die fotoleitfähige Schicht der Druckplatte während des Transports von einem Plattenmagazin zu einem Belichtungstisch mechanisch nicht zu berühren, wird in der zeitgleichen deutschen Patentanmeldung P 3 012 815.5 (EP-A-37 064) vorgeschlagen, einen schwenkbaren Hubzylinder mit einer aus dem Hubzylinder aus- und in diesen einfahrbaren Kolbenstange auszurüsten, die eine schüsselförmige Platte für das Ansaugen und Absetzen der obersten Druckplatte des Stapels trägt, und den Hubzylinder um einen Drehpunkt zwischen einer Aufnahme- und einer Absetzposition der Druckplatte zu verschwenken.

Hierbei stellt sich dann die Aufgabe, die kreisbogenförmig von oben auf eine Auflagefläche abgesenkte Druckplatte, deren fotoleitfähig beschichtete Seite nach oben gerichtet ist, an eine mit Rollen ausgerüstete Vorrichtung für den Weitertransport zu übergeben, ohne daß die Druckplatte beim Absenken auf die Rollen zu liegen kommt und ohne daß die fotoleitfähige Schicht der Druckplatte mit den Rollen in Berührung gelangt.

Diese Aufgabe wird erfindungsgemäß dadurch gelöst, daß ein schwenkbarer Hubzylinder, an dessen Kolbenstange Saugelemente befestigt sind, die Druckform in Gestalt einer Druckplatte einem Magazin entnimmt und kreisbogenförmig mit dem Vorderteil auf eine Saugplatte des Belichtungstisches aufliegt, daß parallel zu beiden Seitenkanten der Druckplatte in Transportrichtung je eine Reihe von Transport- und Antriebsrollen angeordnet ist, und daß die in Transportrichtung der Druckplatte zuerst liegenden Transportrollen aus den Reihen nach außen schwenkbar sind, um ein klemmfreies Ablegen des Vorderteils der Druckplatte auf die Saugplatte des Belichtungstisches zu ermöglichen.

In Weiterbildung der Erfindung sind die Transportrollen und die Antriebsrollen einer Reihe auf Rollenblöcken drehbar gelagert, die auf einer Winkelschiene befestigt sind, und sind ferner die Rollenblöcke der in Transportrichtung zuerst liegenden Transportrollen als Schwenkblöcke ausgebildet. Der Belichtungstisch als Auflagefläche für die Druckplatte enthält zweckmäßigerweise die Saugplatte, unterhalb der ein Hubmagnet befestigt ist, der über ein Hebelgestänge mit den beiden Schwenkblöcken verbunden ist. Dieses Hebelgestänge ermöglicht es, die Schwenkblöcke nach außen zu schwenken, so daß die Vorderkante der von dem Hubzylinder angesaugten Druckplatte, wenn sie kreisbogenförmig von oben auf die Saugplatte aufgelegt wird, zwischen den weggeschwenkten Transportrollen und nachfolgenden, feststehenden Transportrollen zu liegen kommt und die Druckplatte nach dem Beischwenken der Transportrollen, die an den Seitenkanten der Druckplatte anliegen, weitertransportiert werden kann.

Die weitere vorteilhafte Ausbildung der Erfindung ergibt sich aus den Patentansprüchen 4 bis 17.

Mit der Erfindung wird der Vorteil erzielt, daß die Druckplatte, die mit ihrer fotoleitfähigen beschichteten Seite von dem Hubzylinder nach oben gedreht und mit ihrem Vorderteil auf der Saugplatte des Belichtungstisches abgesetzt wurde, mit der beschichteten Seite nach oben in ihre vorbestimmte Position gebracht werden kann, ohne daß die fotoleitfähige Schicht der Druckplatte während des Transportes mechanisch berührt wird.

Die Erfindung wird im folgenden anhand eines zeichnerisch dargestellten Ausführungsbeispiels näher erläutert. Es zeigt

Fig. 1 eine schematische Darstellung verschiedener Bearbeitungsstationen einer Vorrichtung zur Abbildung einer Vorlage auf der fotoleitenden Oberfläche einer Druckplatte,

Fig. 2 eine perspektivische Teilansicht des Belichtungstisches mit weggeschwenkten vorderen Transportrollen und

Fig. 3 eine perspektivische Ansicht des Belichtungstisches nach Fig. 2, mit beigeschwenkten vorderen Transportrollen.

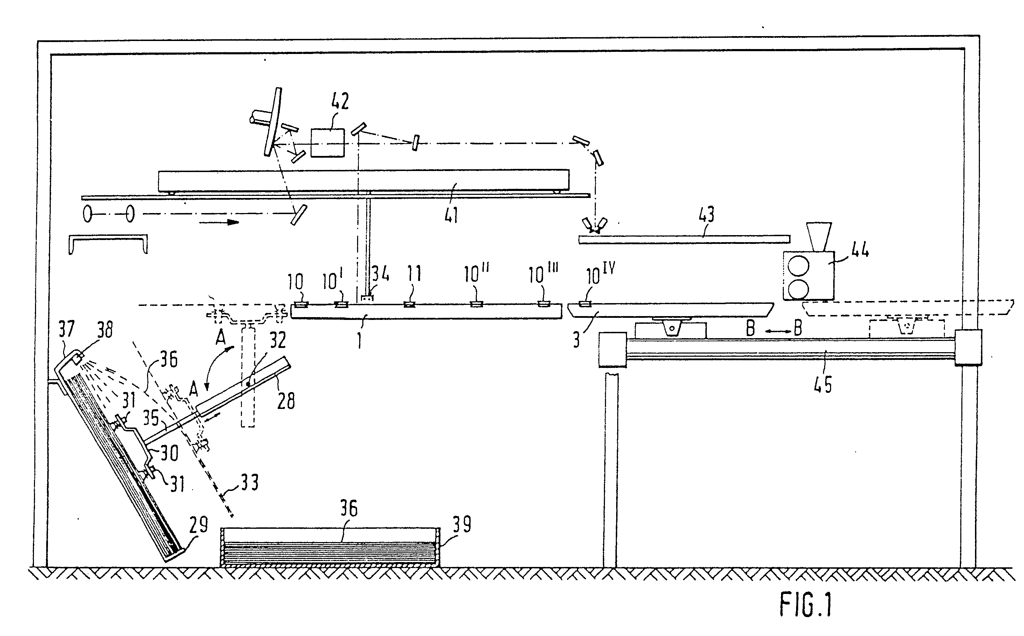

Verschiedene Bearbeitungsstationen einer Vorrichtung zur Abbildung einer Vorlage auf der Oberfläche einer Druckplatte sind in Fig. 1 schematisch dargestellt. Eine Transportstation für die Druckplatten 33, die in einem Magazin 29 gespeichert sind, umfaßt einen schwenkbaren Hubzylinder mit einer aus dem Hubzylinder aus- und in diesen einfahrbaren Kolbenstange 35. Die Druckplatten 33 sind in dem Magazin 29 in der Weise gestapelt, daß jede einzelne Druckplatte innerhalb des Stapels mit ihrer fotoleitfähigen beschichteten Seite nach unten zu liegen kommt.

Die Kolbenstange 35 trägt an dem aus dem Hubzylinder 28 herausragenden Ende eine schüsselförmige Platte 30, an der mehrere Saugelemente 31 befestigt sind. Diese Saugelemente können einfache Sauger oder auch Springsauger sein. Die Saugelemente 31 sind von Federn umgeben, die zwischen der Innenseite der Platte 30 und den Saugnäpfen der Saugelemente 31 angeordnet sind.

Der Hubzylinder 28 ist um einen Drehpunkt 32 aus einer Schräglage in eine Vertikallage verschwenkbar, wie dies durch den Doppelpfeil A—A angezeigt ist. Der Hubzylinder 28 ist in seiner Aufnahmeposition so um den Drehpunkt 32 schwenkbar, daß er senkrecht auf die unbeschichtete Seite der obersten Druckplatte gerichtet ist. Sobald die Platte 30 durch Ausfahren der Kolbenstange 35 auf die oberste Druckplatte aufgesetzt ist, werden die Saugelemente 31 zum Ansaugen und Festhalten der Druckplatte mit Unterdruck beaufschlagt und die Kolbenstange 35 in den Hubzylinder zum Teil eingefahren, bis die Druckplatte 33 die in der Zeichnung gestrichelt dargestellte Lage einnimmt.

Am oberen Ende des Magazins 29 ist an einem abgewinkelten Trägerarm 37 eine Luftdüse 38 vorgesehen, die derart ausgerichtet ist, daß ihr Luftstrom nahezu tangential auf die Unterseite der vom Stapel abgehobenen Druckplatte 33 gerichtet ist. Die einzelnen Druckplatten 33 sind im allgemeinen mit einem Blatt 36 aus Papier, Kunststoff, Folie oder dgl. abgedeckt. Der gegen die vom Stapel abgehobene Druckplatte 33 gerichtete Luftstrom aus der Luftdüse 38 löst das Blatt 36 ab, das die beschichtete Seite der Druckplatte gegen Beschädigungen schützt. Das Blatt 36 wird von dem Luftstrom in eine unterhalb des Belichtungstisches 1 angeordnete Auffangwanne 39 geblasen.

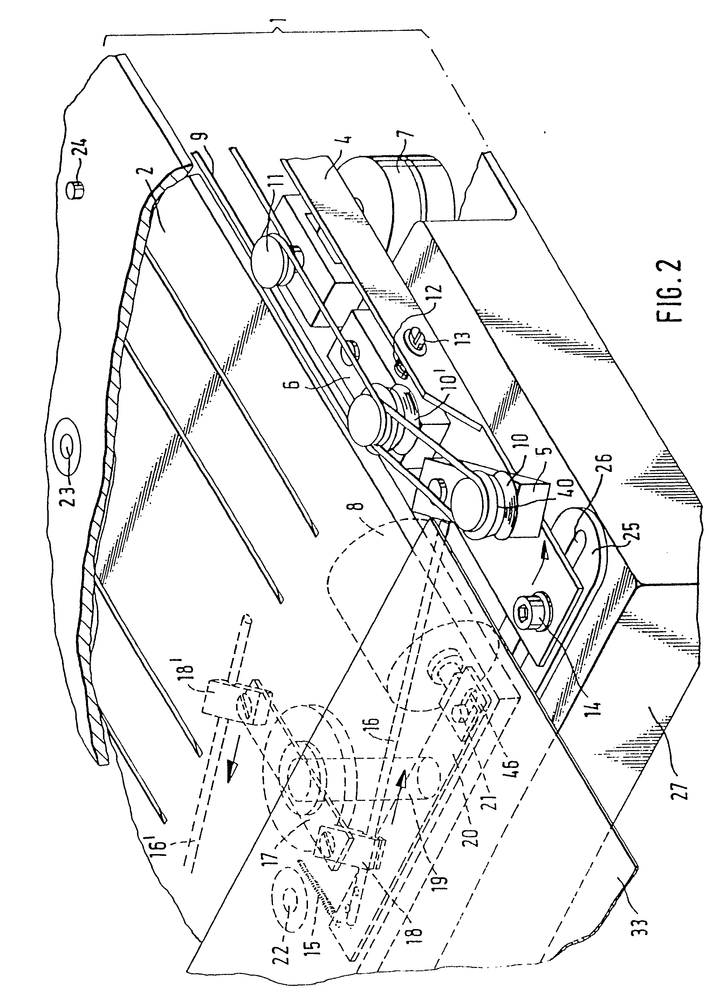

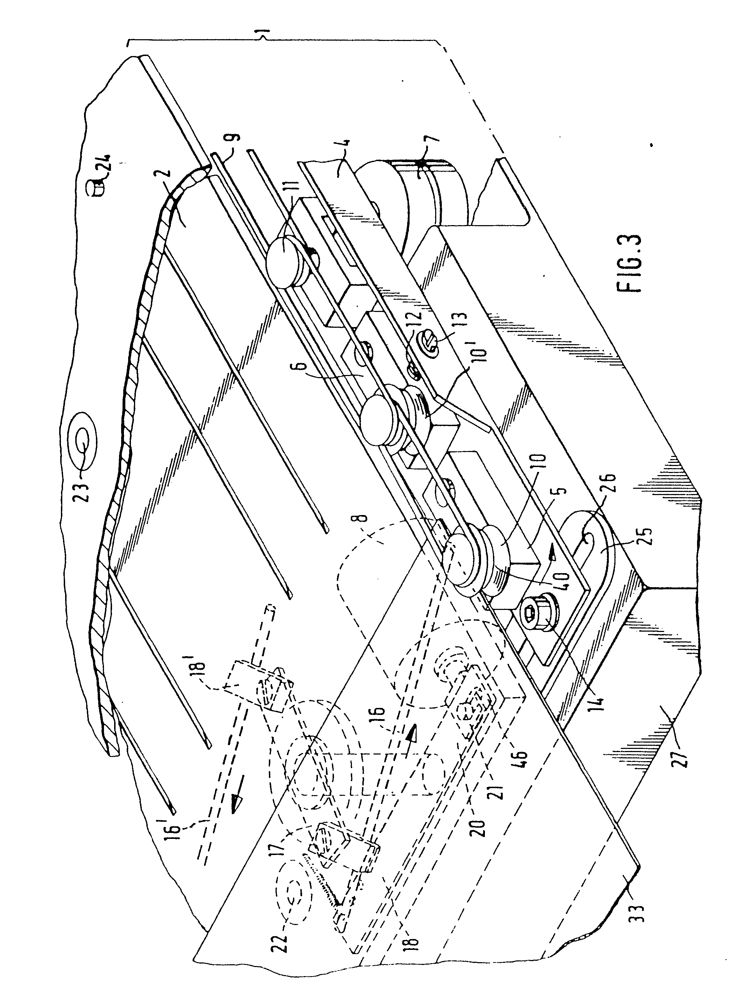

Anschließend wird der Hubzylinder 28 um den Drehpunkt 32 in seine vertikale Stellung geschwenkt, so daß die Druckplatte 33 eine kreisbogenförmige Schwenkbewegung ausführt und von oben her mit ihrem Vorderteil, wie dies in den Fig. 2 und 3 gezeigt ist, auf die Saugplatte 2 des Belichtungstisches 1 aufgesetzt wird.

Zu beiden Seiten des Belichtungstisches befindet sich je eine Reihe von Rollen. Die beiden ersten in einer Reihe hintereinander liegenden Rollen sind Transportrollen 10, 10', die dann folgende Rolle ist eine Antriebsrolle 11, und daran schließen sich wieder Transportrollen 10'', 10''' und 10^IV an, wie in der schematischen Ansicht in Fig. 1 gezeigt ist. Die Anzahl der Transportrollen und der Antriebsrollen ist keineswegs auf die dargestellte Anzahl beschränkt, es ist auch möglich, weniger oder mehr als fünf Transportrollen je Reihe einzusetzen und anstelle einer Antriebsrolle auch zwei Antriebsrollen bei Bedarf vorzusehen.

In den Fig. 2 und 3 ist jeweils nur eine Reihe der Transport- und Antriebsrollen aus Gründen der besseren Übersichtlichkeit gezeigt. Es versteht sich von selbst, daß die nicht gezeigte Reihe der Rollen analog zu der dargestellten Reihe aufgebaut ist.

Der Belichtungstisch 1 umfaßt die Saugplatte 2, auf der die Druckplatte durch den Hubzylinder 28 so aufgelegt wird, daß ihre Vorderkante zwischen der ersten Transportrolle 10 und der zweiten Transportrolle 10' zu liegen kommt. Wie voranstehend schon erwähnt wurde, sind die Transportrollen ebenso wie die Antriebsrollen paarweise zu beiden Seiten der Saugplatte 2 angeordnet. Wenn in der Beschreibung von einer Transportrolle bzw. einer Antriebsrolle die Rede ist, so steht diese stellvertretend jeweils für ein Paar Rollen, wie aus den voranstehenden Ausführungen ersichtlich ist. Die Transportrollen 10, 10', 10'', ... und die Antriebsrolle 11 einer Reihe sind drehbar auf Rollenblöcken gelagert, die auf einer Winkelschiene 4 befestigt sind. Von diesen Rollenblöcken sind diejenigen, die in der Transportrichtung zuerst liegen, als Schwenkblöcke 5 ausgebildet, während die übrigen Rollenblöcke 6 nicht schwenkbar, sondern nur seitlich verschiebbar und/oder ortsfest angeordnet sind. In Fig. 2 ist die Anordnung der Transportrollen gezeigt, bei der die in Transportrichtung der Druckplatte 33 zuerst liegenden Transportrollen 10 aus jeder der beiden Reihen von Transportrollen nach außen geschwenkt sind, um ein klemmfreies Ablegen des Vorderteils der Druckplatte 33 auf die Saugplatte 2 des Belichtungstisches 1 zu ermöglichen.

Beim Auflegen der Druckplatte 33 wird über einen vorderen Schalter 22 oder Näherungsinitiator ein Hubmagnet 8 angesteuert und ausgeschaltet, der unterhalb der Saugplatte 2 bzw. unterhalb des Belichtungstisches 1 befestigt ist. Dieser Hubmagnet ist über ein Hebelgestänge mit den Schwenkblöcken 5 verbunden. Das Hebelgestänge besteht aus einer unteren Lasche 20, die einen Mitnahmezapfen 21 trägt, der in einen Schlitz einer Klemmplatte 46 eingreift, die an der Führungsstange des Hubmagneten 8 befestigt ist. Das Hebelgestänge umfaßt des weiteren eine Verbindungswelle 19 zwischen der unteren Lasche 20 und einer oberen Lasche 17, am Umfang der oberen Lasche 17 befestigte Klemmgelenke 18, 18' und von den Klemmgelenken zu den Schwenkblöcken 5 verlaufende Verbindungsstangen 16, 16'. An der unteren Lasche greift ein Ende einer Zugfeder 15 an, die parallel zu dem Hubmagneten 8 verläuft und deren anderes Ende an dem Belichtungstisch 1 befestigt ist. Sobald die Druckplatte 33 den vorderen Schalter 22 bzw. Näherungsinitiator betätigt, wird der Hubmagnet 8 angesteuert und ausgeschaltet, so daß die Zugfeder 15 über das Hebelgestänge die Schwenkblöcke 5 an die Druckplatte 33 zieht. Jede Transportrolle 10, 10', 10'', ... weist eine Rille 40 auf, in der die Seitenkanten der Druckplatte 33 während des Transportes geführt sind. Sobald die Schwenkblöcke 5 an die Druckplatte 33 herangeschwenkt sind, erfassen die umlaufenden Transportrollen 10 die Druckplatte 33 und fördern sie zur Gänze auf die Saugplatte 2 des Belichtungstisches 1. Der Antrieb der Transportrollen erfolgt über je eine Antriebsrolle 11 in jeder Reihe der Transportrollen. Hierzu ist ein Antriebsmotor 7 an der Winkelschiene 4 befestigt, der die Antriebsrolle 11 antreibt. Die beiden Antriebsmotoren 7 in den beiden Reihen von Rollen sind als Synchronmotoren ausgebildet, so daß ein ständiger Gleichlauf dieser Antriebsmotoren bzw. der Antriebsrollen gewährleistet ist. Von jeder Antriebsrolle 11 führen Rundschnurtransportringe 9 zu den benachbarten Transportrollen 10', 10''. Die Transportrolle 10'' ist gleichfalls durch einen Rundschnurtransportring 9 mit der nachfolgenden Rolle 10''' verbunden, während die Transportrolle 10' mit der ersten Transportrolle 10 auf dem Schwenkblock 5 über einen Rundschnurtransportring 9 in Verbindung steht.

Die Rollenblöcke 6 der Transportrollen 10', 10'', 10''', ... sind mittels Stellschrauben 13, die durch den vertikalen Schenkel der Winkelschiene 4 hindurchgeführt sind und mit den zugehörigen Rollenblöcken 6 im Eingriff stehen, quer zur Transportrichtung der Druckplatte 33 verschiebbar. Dabei ist jede Stellschraube 13 von einer Druckfeder 12 umgeben, die an der Innenwand des vertikalen Schenkels der Winkelschiene 4 und am Rollenblock 6 anliegt. Dadurch ist sichergestellt, daß beim Transport die einzelnen Rollenblöcke 6 durch die Druckfeder 12 seitlich nachgeben können, so daß auch geringfügige Versetzungen oder Schräglagen der Druckplatte 33 während des Transportes durch die elastische Lagerung der Rollenblöcke ausgeglichen werden können. Entweder können alle Rollenblöcke 6 der beiden Reihen von Transportrollen mit Stellschrauben 13 ausgerüstet sein oder nur eine der Reihen, während die andere Reihe von Transportrollen ortsfest auf der Winkelschiene befestigt ist.

Die Druckplatte 33 wird so lange auf der Saugplatte 2 vorwärts transportiert, bis sie gegen einen Anschlagstift 24 anliegt, der in der Saugplatte 2 versenkbar ist. Sobald die Druckplatte durch den Anschlagstift 24 positioniert ist, wird die Saugplatte 2 mit Unterdruck beaufschlagt, wodurch die Druckplatte 33 in ihrer Belichtungslage festgehalten wird. Oberhalb des Belichtungstisches 1 befindet sich ein horizontal verfahrbarer Belichtungswagen 41, der optische Elemente 42 zum Abtasten einer Vorlage 43 und zum Belichten der Druckplatte 33 trägt. Da es sich bei die-sen Bearbeitungsstationen um bekannte Einrich-tungen handelt, werden sie nicht näher beschrieben. An der Unterseite des Belichtungswagens 41 ist eine Coronavorrichtung 34 befestigt, die beim horizontalen Verfahren des Belichtungswagens 41 die Druckplatte 33 auflädt, die anschließend belichtet wird. Nachdem die Druckplatte 33 belichtet ist, wird der Anschlagstift 24 versenkt, so daß die Druckplatte 33 durch die Transportrollen 10, 10¹, ... auf den Entwicklungstisch 3 weitertransportiert werden kann, der mit einer darunter angeordneten Antriebswelle 45 verbunden ist, längs der er in Richtung des Doppelpfeils B—B hin- und herverschoben werden kann. Oberhalb des Entwicklungstisches 3 befindet sich eine Entwicklungsvorrichtung 44, die von oben her über eine Magnetbürste an die Oberfläche der Druckplatte 33 einen Entwicklerbelag, bestehend aus einer Mischung von Trägerteilchen und Toner, anträgt, während die Druckplatte 33 unterhalb der Entwicklungsvorrichtung 44 vorbeigeführt wird.

Es ist selbstverständlich, daß während des Weitertransportes der Druckplatte 33 der Niederdruck der Saugplatte 2 aufgehoben ist. Sobald die Hinterkante der Druckplatte 33 den hinteren Schalter 23 bzw. Näherungsinitiator freigibt, wird von diesem der Hubmagnet 8 angesteuert und erregt, wodurch das Hebelgestänge 16 bis 21 gegen die Zugkraft der Zugfeder 15 die Schwenkblöcke der ersten Transportrollen 10 in die Öffnungslage ausschwenkt. In dieser Stellung ist es dann möglich, eine neue Druckplatte 33 zuzuführen.

Es ist für den Fachmann selbstverständlich, daß anstelle von einem vorderen und hinteren Schalter 22 bzw. 23 oder einem Näherungsinitiator auch jeder sonstige Signalgeber verwendet werden kann, der elektrisch mit dem Hubmagneten 8 verbunden sein kann und diesen aus- bzw. einschaltet.

Auf der Oberseite des Saugplattenträgers 27 des Belichtungstisches 1 sind zwei Führungsteile vorgesehen, von denen in den Fig. 2 und 3 nur das vordere Führungsteil 25 dargestellt ist, das quer zur Transportrichtung der Druckplatte 33 angeordnet ist. Das zweite, nicht gezeigte Führungsteil verläuft parallel zu dem ersten Führungsteil nahe der hinteren Kante des Saugplattenträgers 27. Jedes Führungsteil weist einen Schlitz 26 auf. Die Winkelschienen 4 liegen auf den Führungsteilen 25 auf und sind am vorderen und am hinteren Ende von je einer Befestigungsschraube 14 durchsetzt, die mit den Schlitzen 26 in den gewählten Positionen der Winkelschienen 4 in Eingriff stehen. Dadurch ist es möglich, die Winkelschienen 4 quer zu der Transportrichtung der Druckplatten 33 entlang den Führungsteilen 25 zu verschieben und in der jeweils gewünschten Position durch die Befestigungsschrauben 14 festzulegen. Durch die Verstellbarkeit der Winkelschienen 4, welche die Schwenk- und Rollenblöcke mit den Transport- und Antriebsrollen tragen, ist eine Anpassung an unterschiedlich breite Formate der Druckplatten 33 möglich. Ebenso können unterschiedlich große Saugplatten 2 auf den Saugplattenträger 27 montiert werden, so daß gleichfalls unterschiedliche Formate der Druckplatten 33 berücksichtigt werden können.

Anstelle der in Fig. 1 gezeichneten einzigen Luftdüse können auch mehrere Luftdüsen vorgesehen sein, die zum Teil unterschiedliche Luftstrahlrichtungen haben, um sicherzustellen, daß das Blatt 36 stets in die Auffangwanne 39 ge-langt.

## Patenansprüche

1. Vorrichtung für den Einzug von Druckformen auf einen Belichtungstisch mit Hilfe von Rollen, dadurch gekennzeichnet, daß ein schwenkbarer Hubzylinder (28), an dessen Kolbenstange (35) Saugelemente (31) befestigt sind, die Druckform in Gestalt einer Druckplatte (33) einem Magazin (29) entnimmt und kreisbogenförmig mit dem Vorderteil auf eine Saugplatte (2) des Belichtungstisches (1) auflegt, daß parallel zu beiden Seitenkanten der Druckplatte (33) in Transportrichtung je eine Reihe von Transport- und An-triebsrollen (10, 10¹, 10¹¹, ...; 11) angeordnet ist, und daß die in Transportrichtung der Druckplatte zuerst liegenden Transportrollen (10, 10) aus den Reihen nach außen schwenkbar sind, um ein klemmfreies Ablegen des Vorderteils der Druckplatte (33) auf die Saugplatte (2) des Belichtungstisches (1) zu ermöglichen.

2. Vorrichtung nach Anspruch 1, dadurch gekennzeichnet, daß die Transportrollen (10, 10¹, ...) und die Antriebsrolle (11) einer Reihe auf Rollenblöcken (5, 6) drehbar gelagert sind, die auf einer Winkelschiene (4) befestigt sind und daß die Rollenblöcke der in Transportrichtung zuerst liegenden Transportrollen (10, 10) als Schwenkblöcke (5) ausgebildet sind.

3. Vorrichtung nach den Ansprüchen 1 und 2, dadurch gekennzeichnet, daß der Belichtungstisch (1) als Auflagefläche für die Druckplatte (33) die Saugplatte (2) enthält, unterhalb der ein Hubmagnet (8) befestigt ist, der über ein Hebelgestänge (16, 17, ... 21) mit den beiden Schwenkblöcken (5) verbunden ist.

4. Vorrichtung nach Anspruch 3, dadurch gekennzeichnet, daß das Hebelgestänge aus einer unteren Lasche (20), die einen Mitnahmezapfen (21) trägt, der in einen Schlitz einer Klemmplatte (46) des Hubmagneten (8) eingreift, einer Verbindungswelle (19) zwischen der unteren Lasche (20) und einer oberen Lasche (17), am Umfang der oberen Lasche (17) befestigten Klemmgelenken (18, 18') und von den Klemmgelenken (18, 18') zu den Schwenkblöcken (5) verlaufenden Verbindungsstangen (16, 16') besteht.

5. Vorrichtung nach Anspruch 4, dadurch gekennzeichnet, daß der Mitnahmezapfen (21) nahe dem einen Ende der unteren Lasche (20) angeordnet ist und daß am gegenüberliegenden Ende der unteren Lasche ein Ende einer Zugfeder (15) angreift, die parallel zu dem Hubmagnet (8) verläuft, deren anderes Ende an dem Belichtungstisch (1) befestigt ist.

6. Vorrichtung nach Anspruch 3, dadurch gekennzeichnet, daß in der Saugplatte (2) ein vorderer und ein hinterer Signalgeber (22 bzw. 23) angeordnet sind, die elektrisch mit dem Hubmagnet (8) verbunden sind und diesen aus- bzw. einschalten.

7. Vorrichtung nach Anspruch 6, dadurch gekennzeichnet, daß die Signalgeber (22, 23) Schalter sind, die die Vorderkante bzw. Hinterkante der Druckplatte (33) betätigt.

8. Vorrichtung nach Anspruch 6, dadurch gekennzeichnet, daß die Signalgeber (22, 23) Näherungsinitiatoren sind.

9. Vorrichtung nach Anspruch 2, dadurch gekennzeichnet, daß je ein an der Winkelschiene (4) befestigter Antriebsmotor (7) die Antriebsrolle (11) in jeder Reihe von Transportrollen (10, 10', ...) antreibt und daß für den Antrieb Rundschnurtransportringe (9) vorgesehen sind, die von der Antriebsrolle (11) zu den benachbarten Transportrollen (10', 10'') und zwischen je zwei benachbarten Transportrollen (10, 10', 10'', 10''' ...) verlaufen.

10. Vorrichtung nach Anspruch 9, dadurch gekennzeichnet, daß die beiden Antriebsmotoren (7, 7) Synchronmotoren sind.

11. Vorrichtung nach Anspruch 2, dadurch gekennzeichnet, daß Rollenblöcke (6) der Transportrollen (10', 10'', ...) mittels Stellschrauben (13), die durch den vertikalen Schenkel der Winkelschiene (4) geführt sind und mit den zugehörigen Rollenblöcken (6) im Eingriff stehen, quer zur Transportrichtung der Druckplatte (33) verschiebbar sind.

12. Vorrichtung nach Anspruch 11, dadurch gekennzeichnet, daß jede Stellschraube (13) von einer Druckfeder (12) umgeben ist, die an der Innenwand des vertikalen Schenkels der Winkelschiene (4) und am Rollenblock (6) anliegt.

13. Vorrichtung nach den Ansprüchen 11 und 12, dadurch gekennzeichnet, daß alle Rollenblöcke (6) der beiden Reihen von Transportrollen (10,10; 10',10'; 10'',10''; ...) mit Stellschrauben (13) ausgerüstet sind.

14. Vorrichtung nach den Ansprüchen 11 und 12, dadurch gekennzeichnet, daß die Rollenblöcke (6) einer Reihe von Transportrollen (10, 10', 10'', ...) mit Stellschrauben (13) ausgerüstet und somit verschiebbar sind, während die Rollenblöcke der anderen Reihe von Transportrollen ortsfest auf der Winkelschiene (4) befestigt sind.

15. Vorrichtung nach Anspruch 1, dadurch gekennzeichnet, daß jede Transportrolle (10, 10', 10'', ...) eine Rille (40) aufweist, in der die Seitenkante der Druckplatte (33) während des Transports geführt ist.

16. Vorrichtung nach Anspruch 2, dadurch gekennzeichnet, daß die Saugplatte (2) auf einem Saugplattenträger (27) angeordnet ist, auf dessen Oberseite zwei Führungsteile (25) quer zur Transportrichtung der Druckplatte (33) angeordnet sind, die einen Schlitz (26) aufweisen, daß die Winkelschienen (4) auf den Führungsteilen (25) aufliegen und am vorderen und hinteren Ende von je einer Befestigungsschraube (14) durchsetzt sind, die mit den Schlitzen (26) in den gewählten Positionen der Winkelschienen (4) in Eingriff stehen.

17. Vorrichtung nach Anspruch 3, dadurch gekennzeichnet, daß die Saugplatte (2) einen versenkbaren Anschlagstift (24) aufweist.

## Claims

1. A mechanism for feeding printing masters to an exposure table, with the aid of rollers, characterised in that a swivelling lifting cylinder (28), to the piston rod (35) of which suction elements (31) are fastened, removes a printing master, in the form of a printing plate (33), from a magazine (29) and deposits it in a circular arc-movement with its forward part on a suction plate (2) of the exposure table (1) in that a row each of transport and drive rollers (10, 10', 10'' ..., and 11) is arranged parallel to the two lateral edges of the printing plate (33) in transport direction and in that the transport rollers (10,10) which are the first in the direction of transport of the printing plate are adapted to swivel outwards from the rows to enable the forward part of the printing plate (33) to be deposited on the suction plate (2) of the exposure table (1), without jamming.

2. A mechanism as claimed in claim 1, characterised in that the transport rollers (10, 10' ...) and the drive roller (11) of a row are pivoted on roller blocks (5, 6) which are fastened to an angle bar (4) and wherein the roller blocks of the transport rollers (10,10) which are the first in the direction of transport are constructed as swivel blocks (5).

3. A mechanism as claimed in claims 1 and 2, characterised in that the exposure table (1) comprises, as a support surface for the printing plate (33), the suction plate (2) below which a lifting magnet (8) is mounted which is connected to the two swivel blocks (5) by a lever system (16, 17, ... 21).

4. A mechanism as claimed in claim 3, characterised in that the lever system comprises a lower side bar (20) carrying a coupling pin (21) which engages in a slot of a clamping plate (46) of the lifting magnet (8), a connecting shaft (19) between the lower side bar (20) and an upper side bar (17), clamping knuckles (18, 18') which are fastened to the periphery of the upper side bar (17) and connecting rods (16, 16′) which extend between the clamping knuckles (18, 18′) and the swivel blocks (5).

5. A mechanism as claimed in claim 4, characterised in that the coupling pin (21) is arranged close to one end of the lower side bar (20) and in that the opposite end of the lower side bar is engaged by one end of a tension spring (15) which extends parallel to the lifting magnet (8) and is fastened with its other end to the exposure table (1).

6. A mechanism as claimed in claim 3, characterised in that a front and a rear signal transmitter (22 and 23) are arranged in the suction plate (2) and are electrically connected to the lifting magnet (8) which is de-energized and energized by these signal transmitters.

7. A mechanism as claimed in claim 6, characterised in that the signal transmitters (22 and 23) are switches which are actuated by the front edge and the rear edge, respectively, of the printing plate (33).

8. A mechanism as claimed in claim 6, characterised in that the signal transmitters (22 and 23) are proximity switches.

9. A mechanism as claimed in claim 2, characterised in that a drive motor (7) each which is fastened to the angle bar (4) drives the drive roller (11) in each row of transport rollers (10, 10ᴵ . . .) and in that transmission O-rings (9) are provided for driving, which are extended between the drive roller (11) and the adjacent transport rollers (10ᴵ, 10ᴵᴵ) and between each pair of adjacent transport rollers (10, 10ᴵ, 10ᴵᴵ, 10ᴵᴵᴵ . . .).

10. A mechanism as claimed in claim 9, characterised in that the two drive motors (7,7) are synchronous motors.

11. A mechanism as claimed in claim 2, characterised in that roller blocks (6) of the transport rollers (10ᴵ, 10ᴵᴵ . . .) are capable of being displaced transversely to the direction of transport of the printing plate (33), by means of adjusting screws (13) which are passed through the vertical side of the angle bar (4) and engage in the corresponding roller blocks (6).

12. A mechanism as claimed in claim 11, characterised in that each adjusting screw (13) is surrounded by a compression spring (12) which rests against the inner wall of the vertical side of the angle bar (4) and against the roller block (6).

13. A mechanism as claimed in claims 11 and 12, characterised in that all of the roller blocks (6) of the two rows of transport rollers (10,10, 10ᴵ,10ᴵ, 10ᴵᴵ,10ᴵᴵ . . .) are equipped with adjusting screws (13).

14. A mechanism as claimed in claims 11 and 12, characterised in that the roller blocks (6) of one of the rows of transport rollers (10, 10ᴵ, 10ᴵᴵ . . .) are equipped with adjusting screws (13) and are, consequently, displaceable, while the roller blocks of the other row of transport rollers are stationarily mounted on the angle bar (4).

15. A mechanism as claimed in claim 1, characterised in that each transport roller (10, 10ᴵ, 10ᴵᴵ . . .) has a groove (40) in which the lateral edge of the printing plate (33) is guided during transport.

16. A mechanism as claimed in claim 2, characterised in that the suction plate (2) is arranged on a suction plate support (27), on the upper side of which two guiding elements (25) are arranged transversely to the direction of transport of the printing plate (33) which are provided with slots (26) in that the angle bars (4) are supported on the guiding elements (25) and have a fixing screw each at their front and rear ends, the fixing screws engaging in the slots (26) in the selected positions of the angle bars (4).

17. A mechanism as claimed in claim 3, characterised in that the suction plate (2) has a stop pin (24) which is capable of being lowered.

**Revendications**

1. Dispositif pour l'amenée de clichés d'impression sur une table d'insolation à l'aide de galets, caractérisé en ce qu'un vérin pivotant (28) à la tige de piston (35) duquel sont fixés des éléments aspirants (31), prélève le cliché d'impression, présenté sous la forme d'une plaque d'impression (33), dans un magasin (29) et par une trajectoire en arc de cercle, le dépose par sa partie avant sur une plaque aspirante (2) de la table d'insolation (1), en ce que, parallèlement à chacun des deux bords latéraux de la plaque d'impression (33) est disposée dans le sens du transport, une rangée de galets de transport et d'entraînement (10, 10ᴵ, 10ᴵᴵ, 10ᴵᴵᴵ, . . .; 11) et en ce que les galets de transport, (10,10) situés en première position dans la direction du transport de la plaque d'impression peuvent être écartés des rangées par pivotement vers l'extérieur, pour permettre la dépose sans coincement de la partie avant de la plaque d'impression (33) sur la plaque aspirante (2) de la table d'insolation(1).

2. Dispositif selon la revendication 1, caractérisé en ce que les galets de transport (10, 10ᴵ, . . .) et le galet d'entraînement (11) d'une rangée sont montés rotatifs sur les blocs à galets (5, 6) qui sont fixés à une cornière (4) et en ce que les blocs à galets des galets de transport (10,10) situés en première position dans le sens de transport sont constitués par des blocs pivotants (5).

3. Dispositif selon les revendications 1 et 2, caractérisé en ce que la table d'insolation (1) contient, comme surface d'appui pour la plaque d'impression (33), la plaque aspirante (2) au-dessous de laquelle est fixé un électro-aimant de manoeuvre (8) qui est relié aux deux blocs pivotants (5) par l'intermédiaire d'une tringlerie à leviers (16, 17, . . . 21).

4. Dispositif selon la revendication 3, caractérisé en ce que la tringlerie à leviers est composée d'une biellette inférieure (20) qui porte un doigt d'entraînement (21), lequel est engagé dans une fente d'une plaque de serrage (46) de l'électro-aimant de manoeuvre (8), un arbre de liaison (19) placé entre la biellette inférieure (20) et une biellette supérieure (17), des articulations de serrage (18, 18′) fixées à la périphérie de la biellette supérieure (17) et des tringles de liaison (16, 16') qui s'étendent des articulations de serrage (18, 18') aux blocs pivotants (5).

5. Dispositif selon la revendication 4, caractérisé en ce que le doigt d'entraînement (21) est disposé à proximité d'une extrémité de la biellette inférieure (20) et en ce que l'extrémité opposée de la biellette inférieure est attaquée par une extrémité d'un ressort de traction (15) qui s'étend parallèlement à l'électro-aimant de manoeuvre (8) et dont l'autre extrémité est fixée à la table d'insolation (1).

6. Dispositif selon la revendication 3, caractérisé en ce que dans la plaque aspirante (2) sont disposés un émetteur de signaux avant et un émetteur de signaux arrière (22 et 23 respectivement) qui sont connectés électriquement à l'électro-aimant de manoeuvre (8) et mettent ce dernier hors circuit ou en circuit.

7. Dispositif selon la revendication 6, caractérisé en ce que les émetteurs de signaux (22, 23) sont des commutateurs qui sont actionnés respectivement par le bord avant et par le bord arrière de la plaque d'impression (33).

8. Dispositif selon la revendication 6, caractérisé en ce que les émetteurs de signaux (23, 22) sont des déclencheurs de proximité.

9. Dispositif selon la revendication 8, caractérisé en ce qu'un moteur déntraînement (7) fixé à la cornière (4) entraîne le galet d'entraînement (11) prévu dans chaque rangée de galets de transport (10, 10¹, ...) et en ce qu'il est prévu, pour l'entraînement, des boucles de transport (9) formant des courroies rondes, qui s'étendent du galet d'entraînement (11) aux galets de transport voisins (10¹, 10¹¹) et entre deux galets de transport voisins (10, 10¹, 10¹¹, 10¹¹¹ ...).

10. Dispositif selon la revendication 9, caractérisé en ce que les deux moteurs d'entraînement (7, 7) sont des moteurs synchrones.

11. Dispositif selon la revendication 2, caractérisé en ce que des blocs à galets (6) des galets de transport (10¹, 10¹¹ ...) peuvent être déplacés en translation transversalement à la direction de transport de la plaque d'impression (33) au moyen de vis de réglage (13) qui sont enfilées travers l'aile verticale de la cornière (4) et sont en prise avec les blocs à galets correspondants (6).

12. Dispositif selon la revendication 11, caractérisé en ce que chaque vis de réglage (13) est entourée d'un ressort de compression (12) qui est appuyé contre la paroi intérieure de l'aile verticale de la cornière (4) et est appuyé contre le bloc à galets (6).

13. Dispositif selon les revendications 11 et 12, caractérisé en ce que tous les blocs à galets (6) des deux rangées de galets de transport (10, 10; 10¹, 10¹; 10¹¹, 10¹¹, ...) sont équipés de vis de réglage (13).

14. Dispositif selon les revendications 11 et 12, caractérisé en ce que les blocs à galets (6) d'une rangée de galets de transport (10, 10¹, 10¹¹, ...) sont équipés de vis de réglage et par conséquence mobiles en translation tandis que les blocs à galets de l'autre rangée de galets de transport sont fixes en position sur la cornière (4).

15. Dispositif selon la revendication 1, caractérisé en ce que chaque galet de transport (10, 10¹, 10¹¹, ...) présente une gorge (40) dans laquelle le bord latéral de la plaque d'impression (33) est guidé pedant le transport.

16. Dispositif selon la revendication 2, caractérisé en ce que la plaque aspirante (2) est articulée sur un support de plaque aspirante (27) sur la face supérieure duquel sont disposées, transversalement à la direction du transport de la plaque d'impression (33), deux pièces de guidage (25) qui présentent une fente (26), en ce que les cornières (4) sont appuyées sur les pièces de guidage (25) et traversées à chacune des extrémités avant et arrière par une vis de fixation (14) qui est en prise avec les fentes (26) dans les positions choisies des cornières (4).

17. Dispositif selon la revendication 3, caractérisé en ce que la plaque aspirante (2) présente un doigt de butée escamotable (24).

FIG.1

FIG.2

0 037 065

FIG.3

0 037 065

13